# FASCICULE DE BREVET EUROPEEN

(11) **EP 1 058 818 B1**
(45) Date de publication et mention de la délivrance du brevet: **02.03.2005**
(21) Numéro de dépôt: 99961105.6
(22) Date de dépôt: 17.12.1999
(51) Int. Cl.: G01C 19/70

(54) **SUSPENSION ELASTIQUE ANTIVIBRATOIRE POUR UNITE DE MESURE INERTIELLE**
SCHWINGUNGSDÄMPFENDE ELASTISCHE AUFHÄNGUNG FÜR TRÄGHEITSMESSEINHEIT
ANTIVIBRATION ELASTIC SUSPENSION FOR INERTIAL MEASURING UNIT

(30) Priorité: 23.12.1998 FR 9816356
(43) Date de publication de la demande: 13.12.2000
(73) Titulaire: THALES AVIONICS S.A., 78141 Vélizy Villacoublay Cédex (FR)
(72) Inventeur: GALLON, Pierre, Thomson-CSF P.I. Dépt. Brevets, 94117 Arcueil Cedex (FR); CORDONNIER, Jacques, Thomson-CSF P.I. Dépt.Brevets, 94117 Arcueil Cedex (FR)
(74) Mandataire: Beylot, Jacques
(86) Numéro de dépôt international: PCT/FR1999/003189
(87) Numéro de publication internationale: WO 2000/039526

(56) Documents cités:
- WO-A-86/00984
- FR-A- 2 759 160
- US-A- 4 711 575

## Description

La présente invention concerne les unités de mesure inertielle de mouvement, plus particulièrement mais non exclusivement, destinées à être incorporées dans des centrales inertielles à gyromètres laser activés à l'aide de vibrations mécaniques, et destinées à équiper des aéronefs.

Ces unités de mesure inertielle doivent, lorsqu'elles sont montées sur des mobiles, être protégées par des amortisseurs, des sollicitations mécaniques parasites de types vibrations ou chocs afin que celles-ci ne perturbent pas leur fonctionnement et provoquent le moins possible de bruit dans leurs signaux de mesure. En effet, s'il est possible, dans une certaine mesure, de lutter contre le bruit affectant les signaux de mesure d'une centrale inertielle par suite de sollicitations mécaniques parasites par des traitements numériques, cela est coûteux en puissance de calcul si bien que l'on cherche à réduire le plus possible les sollicitations mécaniques parasites.

Pour ce faire, il est habituel de monter les capteurs d'une unité de mesure inertielle, gyromètres et accéléromètres, sur ou dans un châssis support à la fois rigide et léger, suspendu à l'intérieur d'un boîtier par l'intermédiaire d'un petit nombre de plots élastiques amortisseurs.

Dans le cas où les gyromètres sont des gyromètres laser, un problème nouveau apparaît du fait de l'utilisation, pour remédier à leur manque de sensibilité aux basses vitesses de rotation, d'une activation mécanique qui provoque, par réaction, des mouvements parasites du boîtier.

En effet, le principe d'un gyromètre laser monoaxe est basé sur l'utilisation de deux faisceaux lumineux monochromatiques se propageant en sens contraires dans un plan selon un même cheminement en boucle fermée. Lorsque le plan du cheminement des deux faisceaux lumineux monochromatiques contrapropagatifs est animé d'un mouvement de rotation par rapport à sa normale, les longueurs effectives des trajets parcourus par les deux faisceaux changent entraînant une différence de fréquence entre les deux faisceaux puisque la fréquence d'oscillation d'un laser est dépendante de la longueur du trajet parcouru par son faisceau. Cette différence de fréquence qui peut être mesurée en faisant interférer les deux faisceaux sur un photodétecteur donne alors une mesure de la vitesse de rotation du plan de cheminement des deux faisceaux lumineux autour de sa normale qui est l'axe sensible du gyromètre. Cependant, lorsque la différence des trajets des deux faisceaux est faible, les deux faisceaux lumineux se couplent et oscillent sur une même fréquence, si bien qu'il est impossible de mesurer les faibles vitesses de rotation. Pour pallier à ce manque de sensibilité des gyromètres laser monoaxes aux faibles vitesses de rotation, il est connu de les animer d'un mouvement mécanique vibratoire d'oscillation autour de leur axe sensible afin d'augmenter leur vitesse de rotation apparente et de permettre la mesure des faibles vitesses de rotation. Le décalage produit sur la mesure de rotation par ce mouvement mécanique vibratoire auxiliaire est éliminé ultérieurement par un traitement approprié du signal fourni par le gyromètre.

Les gyromètres laser triaxes, comme par exemple décrits dans le brevet FR-A-2 759 160 et dans WO-A-8600984, sont constitués d'un assemblage selon un bloc rigide de trois gyromètres laser monoaxes ayant leurs axes sensibles orientés selon les trois axes d'un trièdre trirectangle et, éventuellement, des éléments communs. Ils sont activés pour pallier à leur manque de sensibilité aux faibles vitesses de rotation par un seul mouvement mécanique vibratoire d'oscillation autour d'un axe qui est orienté différemment de leurs axes sensibles, dans une direction telle que ce mouvement présente des composantes oscillatoires de mêmes amplitudes autour des trois axes sensibles des trois gyromètres laser monoaxes.

Le mouvement mécanique vibratoire d'activation est obtenu, en général, en montant le bloc rigide constitué des trois gyromètres laser triaxe, dit bloc gyromètre laser triaxe, entre deux couronnes support, qui sont étagées et centrées sur son axe d'activation et présentent une certaine flexibilité en torsion de rotation. Ces couronnes support sont attachées rigidement par leur moyeu ou périphérie intérieure, au bloc gyromètre triaxe. Elles servent de pièces intercalaires venant au contact, par leur jante ou périphérie extérieure, avec une chemise cylindrique qui entoure le bloc gyromètre laser triaxe et qui sert de châssis supportant à la fois le bloc gyromètre laser triaxe et les capteurs accélérométriques de l'unité de mesure inertielle. Les deux couronnes support sont fixées par leur jante ou périphérie extérieure à la paroi intérieure de la chemise cylindrique. L'une d'entre elles est équipée d'un moteur oscillatoire piézo-électrique permettant d'engendrer et d'entretenir les oscillations rotatives d'activation. La chemise cylindrique renfermant le bloc gyromètre laser triaxe et supportant les accéléromètres est elle-même placée dans un boîtier et attachée à la paroi interne de celui-ci par l'intermédiaire de plusieurs plots élastiques amortisseurs régulièrement répartis sur son pourtour.

Parmi les sollicitations mécaniques parasites auxquelles sont sensibles les gyromètres laser, les plus gênantes sont celles qui provoquent des mouvements coniques des gyromètres combinant des rotations autour des directions transverses à leurs axes sensibles. Certains de ces mouvements coniques ont pour origine des perturbations extérieures transmises au bloc gyromètre laser par le boîtier, la suspension constituée par les plots élastiques amortisseurs et les couronnes support flexibles en torsion de rotation ; ils se manifestent plus particulièrement à la fréquence de la suspension qui est une fréquence basse de l'ordre quelques dizaines de Hertz. Mais d'autres ont pour origine la réaction du boîtier au mouvement mécanique d'activation qui est transmise au bloc gyromètre laser par l'intermédiaire de la suspension et des couronnes support. Ces derniers se manifestent à la fréquence d'activation qui est de l'ordre de plusieurs centaines de Hertz.

Pour lutter contre les bruits dans les signaux délivrés par des gyromètres ayant pour origine des mouvements coniques parasites, il est habituel d'introduire une compensation des erreurs dues aux mouvements coniques par détection de ces mouvements, estimation de leurs influences sur les signaux des gyromètres et traitement numérique des signaux des gyromètres pour compenser ces influences.

Cependant, les mouvements coniques parasites à la fréquence d'activation ne peuvent être estimés et compensés correctement par les traitements numériques habituels en raison de leur fréquence trop élevée. On pourraît songer à repousser la limitation en fréquence des traitements numériques de compensation mais cela exigerait l'utilisation de convertisseurs analogique-numérique et d'une centrale de calcul beaucoup plus performants que ceux utilisés actuellement.

Une autre façon de procéder est de prendre le maximum de dispositions pour atténuer ces mouvements coniques parasites à la fréquence d'activation qui sont à l'origine d'un bruit résiduel gênant et de dérives à très basse fréquence dans les signaux des gyromètres. Comme ils sont transmis aux gyromètres par leur suspension à amortisseur, celle-ci constitue une voie d'action possible. Or il est apparu que la suspension actuelle des gyromètres dans leur boîtier par plots élastiques amortisseurs n'était pas optimale en raison de dissymétries dans les caractéristiques d'amortissement autour de l'axe d'activation qui sont provoquées par des différences inévitables de raideur entre les plots élastiques amortisseurs et qui sont à l'origine de couplages d'axes favorisant la propagation de mouvements coniques parasites en direction du bloc gyromètre.

La présente invention a pour but de réduire les mouvements coniques parasites auxquels sont soumis des gyromètres laser à mouvement d'activation mécanique afin de diminuer le bruit résiduel et les dérives très basse fréquence affectant leurs signaux, cela en améliorant la symétrie de la suspension d'un gyromètre par rapport à son axe d'activation afin de diminuer l'amplitude des mouvements transverses par couplage entre les différents degrés de liberté.

Elle a pour objet une suspension élastique antivibratoire conçue pour attacher le châssis d'une unité de mesure inertielle à l'intérieur d'un boîtier, un bloc gyromètre laser à mouvement mécanique d'activation étant fixé dans ledit châssis par l'intermédiaire de deux couronnes support, flexibles en torsion de rotation, étagées le long du châssis et centrées sur l'axe d'activation du bloc gyromètre. Cette suspension élastique antivibratoire est remarquable en ce qu'elle comporte au moins une membrane annulaire souple disposée coaxialement à l'axe d'activation du bloc gyromètre et fixée par son pourtour intérieur à la périphérie extérieure du châssis et par son pourtour extérieur à la paroi interne du boîtier.

Avantageusement, ladite membrane annulaire souple est une membrane plane.

Avantageusement, ladite membrane annulaire souple est fixée à la périphérie extérieure du châssis de l'unité de mesure inertielle par pincement de son bord intérieur entre un anneau de fixation solidaire de la périphérie extérieure du châssis et une rondelle de serrage attachée au dit anneau de fixation.

Avantageusement, ladite membrane annulaire souple est fixée à l'intérieur d'un cadre rigide solidaire du boîtier par pincement de son bord extérieur entre ledit cadre et une rondelle de serrage attachée audit cadre rigide.

Avantageusement, ladite membrane annulaire souple est réalisée en une matière souple moulée, et renforcée au niveau de ses bords intérieur et extérieur par deux cerclages rigides pris dans la masse de la matière moulée et percés d'orifices de vissage.

Avantageusement, ladite membrane annulaire souple est en une matière plastique souple.

Avantageusement, ladite membrane annulaire souple est en une matière caoutchouteuse.

Avantageusement, cette suspension élastique antivibratoire comporte deux membranes annulaires souples centrées sur l'axe d'activation du bloc gyromètre laser, disposées de manière étagée sur la hauteur de la paroi extérieur du châssis, chacune de ces deux membranes annulaires souples étant fixée par son bord intérieur à la paroi extérieure du châssis et par son bord extérieur à la paroi intérieure du boîtier.

Avantageusement, le boîtier de l'unité de mesure inertielle est cylindrique et comporte intérieurement, au niveau de ses deux extrémités, des plateaux annulaires auxquels sont fixés les membranes annulaires souples de la suspension élastique antivibratoire.

Avantageusement, le bloc gyromètre laser est fixé, dans l'unité de mesure inertielle, à l'intérieur d'un châssis cylindrique, au moyen d'au moins une couronne support qui est placée à un sommet du châssis cylindrique et dont le pourtour extérieur est accessible de l'extérieur du châssis cylindrique et équipé de moyens d'accrochage permettant la fixation du bord intérieur d'une membrane annulaire souple de la suspension élastique antivibratoire.

Cette suspension élastique par membrane respecte beaucoup mieux la symétrie par rapport à l'axe d'activation du gyromètre laser qu'une suspension élastique par un petit nombre de patins amortisseurs isolés. Elle permet ainsi, de réduire dans une forte proportion les couplages d'axes et par conséquent les amplitudes des mouvements transverses parasites provoqués par la réaction du boîtier aux oscillations d'activation.

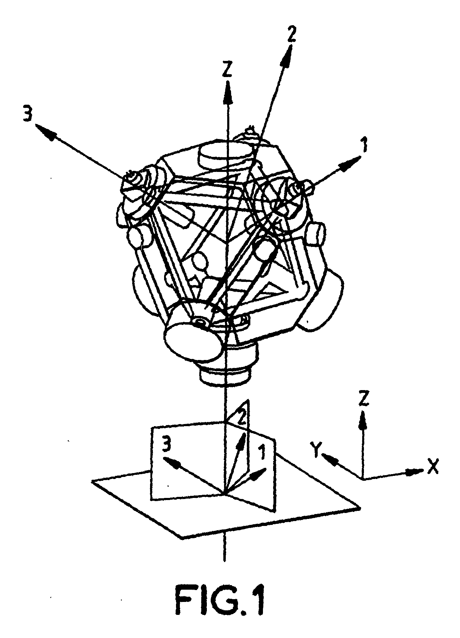

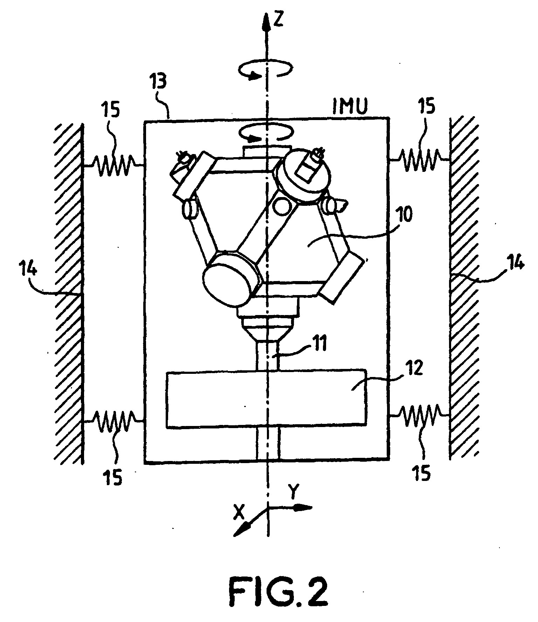

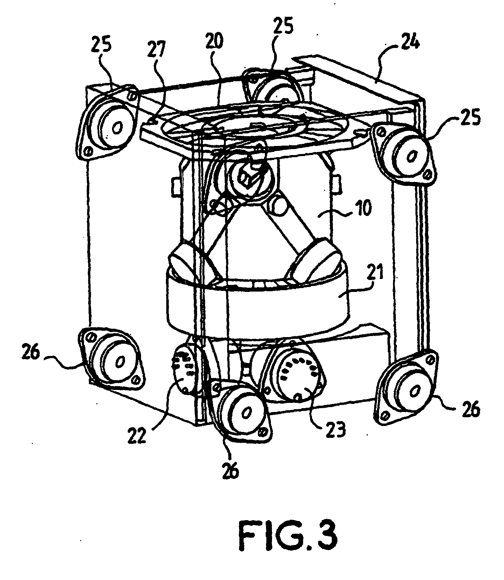

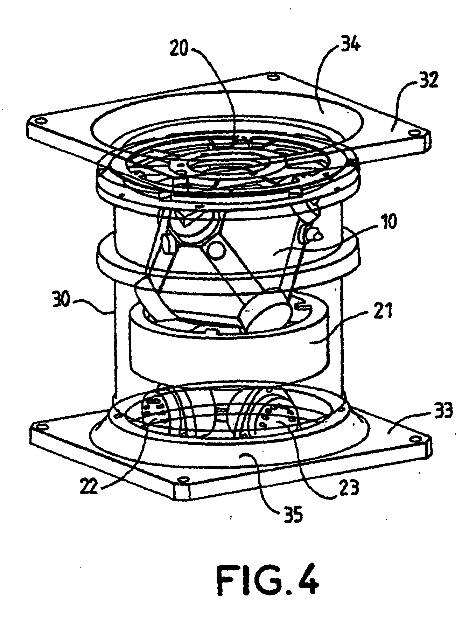

D'autres caractéristiques et avantages de l'invention ressortiront de la description ci-après d'un mode de réalisation donné à titre d'exemple. Cette description sera faite en regard du dessin dans lequel :
- une figure 1 est une vue en perspective montrant l'aspect extérieur d'un bloc gyromètre laser triaxe,
- une figure 2 est un schéma de principe illustrant le montage mécanique d'une unité de mesure inertielle équipée d'un bloc gyromètre laser triaxe en vue de permettre un mouvement d'activation tout en amortissant les contraintes mécaniques parasites appliquées à l'unité de mesure inertielle,
- une figure 3 est une vue en perspective et en transparence d'une centrale de mesure inertielle à bloc gyromètre laser triaxe et activation mécanique monté dans un châssis cylindrique creux, lui-même fixé dans un boîtier au moyen d'une suspension élastique antivibratoire selon la technique actuelle, et
- une figure 4 est une vue en perspective et en transparence d'une unité de mesure inertielle à bloc gyromètre laser triaxe à activation mécanique monté dans un châssis cylindrique creux, lui-même fixé dans un boîtier au moyen d'une suspension élastique antivibratoire selon l'invention.

La figure 1 montre l'apparence d'un bloc gyromètre laser triaxe classique. Celui-ci est constitué, pour l'essentiel, d'un bloc de verre dans lequel sont creusés des canaux délimitant trois parcours fermés quadrangulaires selon trois plans orthogonaux, destinés à être parcourus par des faisceaux laser contrapropagatifs. Dans un but d'économie de moyens (réduction du nombre de miroirs de renvoi simples et de miroirs mobiles pour les asservissements en longueur des trajets des faisceaux laser), les trois parcours quadrangulaires ont des sommets en commun deux à deux. Cela conduit à un bloc gyromètre laser triaxe 10 ayant la forme générale d'un cube à coins coupés. Pour davantage de détails sur ce genre de bloc gyromètre laser triaxe, on peut se reporter au brevet français FR 2 512 198. L'important, pour la suite de la description étant que le mouvement d'activation nécessaire pour pallier le manque de sensibilité des trois gyromètres laser à axes de sensibilité orthogonaux qui sont combinés dans le même bloc 10 est un mouvement d'oscillations en rotation autour d'un axe Z faisant trois angles de même valeur par rapport aux trois axes sensibles orthogonaux 1, 2, 3 des trois gyromètres.

La figure 2 donne le schéma de principe de montage d'un bloc gyromètre laser triaxe pour autoriser une activation mécanique consistant en un mouvement oscillatoire de rotation du bloc gyromètre laser triaxe autour d'un axe fixe Z tout en amortissant autant que faire se peut, les excitations mécanique parasites transmises au bloc gyromètre laser triaxe par son porteur.

Pour obtenir le mouvement d'activation, le bloc gyromètre laser doit être soumis à l'action d'un moteur rotatif oscillant. Cela est schématisé sur la figure 2 par le montage du bloc gyromètre 10 sur un axe d'entraînement 11 confondu avec l'axe d'activation Z et actionné par un moteur rotatif oscillant 12 lui-même fixé à un châssis 13. L'amortissement des excitations mécaniques parasites provenant du porteur 14 est schématisé sur la figure 2, par une fixation du châssis 13 sur le porteur 14 par l'intermédiaire d'amortisseurs 15.

Dans la technique actuelle, les exigences de liberté d'oscillations en rotation autour de l'axe d'activation du bloc gyromètre laser et d'amortissement des excitations mécaniques parasites provenant du porteur sont résolues par l'adoption de l'architecture représentée à la figure 3. On reconnaît sur cette figure 3, le bloc gyromètre laser 10. Celui-ci est monté entre de deux couronnes support 20, 21, de même axe, centrées sur l'axe d'activation Z. Ces couronnes support 20, 21 ont une certaine flexibilité en torsion de rotation afin de laisser au bloc gyromètre laser 10 une certaine liberté de mouvement autour de son axe d'activation. Elles ont, de façon générale, la forme d'une roue à rayons avec un moyeu maintenu au centre d'une jante par des lamelles radiales, flexibles, qui sont disposées dans des plans transversaux et régulièrement réparties autour du moyeu, et qui font office de ressorts. L'une d'entre elles 21 est équipée d'un moteur piézo-électrique et constitue le moteur rotatif oscillant fournissant le mouvement d'activation.

Le moteur piézo-électrique consiste en des couples de plaquettes de céramique piézo-électrique pourvues sur leurs flancs d'électrodes d'excitation et collées en vis à vis sur plusieurs des lamelles radiales solidarisant le moyeu à la jante de la couronne support 21. Ces couples de plaquettes piézo-électriques, lorsqu'elles sont excitées de manière convenable par une tension électrique, provoque un effet de bilame sur les lamelles radiales qui, lorsqu'il est répétitif, est à l'origine d'oscillations de rotation entre le moyeu et la jante de la couronne support 21.

Par rapport au schéma de principe de la figure 3, l'axe d'entraînement du moteur d'activation est supprimé, ce qui permet de s'affranchir des mouvements parasites dus à des flexions non désirées de l'axe et également, d'obtenir un montage plus compact.

Le bloc gyromètre laser 10 est fixé par ses deux couronnes support 20 et 21 à l'intérieur d'une chemise cylindrique rigide qui n'est pas représentée sur la figure 3 afin de laisser visibles le bloc gyromètre et ses couronnes support. Cette chemise cylindrique rigide sert de châssis à l'unité de mesure inertielle et supporte en plus du bloc gyromètre laser 10 des capteurs accélérométriques 22, 23. Elle est placée dans un boîtier 24 et fixée à celui-ci par des plots amortisseurs également répartis sur sa périphérie. Les plots amortisseurs au nombre de huit sont scindés en deux groupes de quatre 25, 26. L'un 25 des groupes de plots amortisseurs prend appui au sommet de l'enveloppe cylindrique, sur la périphérie extérieure de la couronne support 20 qui est solidaire de ladite enveloppe cylindrique et présente des oreilles de fixation 27 dépassant de cette dernière tandis que l'autre groupe de plots amortisseurs prend appui à la base de l'enveloppe cylindrique sur des oreilles de fixation non visibles sur la figure 3.

Cette suspension élastique antivibratoire a l'inconvénient de laisser parvenir au bloc gyromètre laser, des vibrations mécaniques qui sont dues à la réaction du boîtier de l'unité de mesure inertielle au mouvement d'activation et qui provoquent des mouvements coniques parasites à la fréquence du mouvement d'activation responsable à la fois, d'un fond de bruit dans les signaux délivrés par le gyromètre imparfaitement éliminé par filtrage passe-bas et également de dérives à très basse fréquence.

Pour lutter contre cet inconvénient, on propose de modifier la suspension élastique antivibratoire conformément à la figure 4.

La figure 4 montre le bloc gyromètre 10 avec ses deux couronnes support 20, 21 vus en transparence à travers la chemise cylindrique rigide 30 qui sert de châssis à l'unité de mesure inertielle. Comme indiqué précédemment, cette chemise cylindrique rigide 30 supporte non seulement le bloc gyromètre laser 10 par l'intermédiaire de ses couronnes support 20, 21 mais également des capteurs accélérométriques 22, 23. Le boîtier de l'unité de mesure inertielle n'est pas montré dans cette figure 4 dans un but de clarté. II est seulement rappelé par deux cadres de fixation 32, 33 qui en font partie et qui sont placés en vis à vis, l'un 32 à son sommet, l'autre 33 à sa base, avec leurs ouvertures circulaires centrées sur l'axe d'activation du bloc gyromètre laser 10. Ces cadres de fixation 32, 33 qui sont solidaires du boîtier, ont une ouverture centrale d'un diamètre légèrement supérieure à celui de la chemise cylindrique rigide 30. Ils servent à l'ancrage, à l'intérieur du boîtier, par une suspension élastique antivibratoire annulaire, de la chemise cylindrique rigide 30 supportant le bloc gyromètre laser 10 et les capteurs accélérométriques 22, 23.

La suspension élastique antivibratoire annulaire est constituée de deux membranes annulaires souples 34, 35 joignant les pourtours des ouvertures intérieures des cadres de fixation 32, 33 du boîtier avec les pourtours extérieurs du sommet et de la base de la chemise cylindrique rigide 30.

Chaque membrane souple annulaire 34 peut être pourvue, sur son pourtour extérieur comme sur son pourtour intérieur, d'un cerclage rigide qui assure à la membrane le maintient de sa forme circulaire et facilite son montage. Ce cerclage rigide peut être pris dans la masse de la matière souple de la membrane ou rapporté et collé. Il est percé d'orifices de vissage régulièrement répartis sur son pourtour, permettant de fixer facilement, par vissage, le bord de la membrane souple qu'il rigidifie, sur le pourtour intérieur de l'ouverture d'un cadre de fixation 32 du boîtier s'il s'agit d'un cerclage rigide équipant le bord extérieur d'une membrane souple annulaire, ou sur le pourtour extérieur du sommet ou de la base de la chemise cylindrique creuse 30 servant de châssis, s'il s'agit d'un cerclage rigide équipant le bord intérieur de la membrane souple.

Les membranes souples sont préférablement planes pour des facilités de fabrication mais peuvent également être de formes non planes tout en conservant une symétrie de révolution. Elles sont réalisées, par exemple en une matière plastique ou en caoutchouc. Elles peuvent être obtenues par moulage ou par découpe à partir d'une matière en feuille. De façon générale, leur fabrication relève de la même technique que la fabrication des joints souples, une attention particulière devant cependant être apportée au choix de la matière qui les compose pour qu'elles possèdent une bonne résistance vieillissement et qu'elles ne soient pas sujettes à la longue à des craquelures provoquées par les efforts de cisaillement qu'elles subissent du fait du mouvement d'activation.

La membrane souple annulaire 34 rattachant le pourtour extérieur du sommet de la chemise cylindrique creuse 30 servant de châssis au pourtour intérieur de l'ouverture du cadre 32 de fixation du boîtier peut également être fixée par son bord intérieur à un couvercle obturant la face supérieure de la chemise creuse cylindrique 30 servant de châssis et recouvrant la couronne support 20. Mais il est également possible de fixer le bord intérieure de cette membrane souple annulaire 34 à la périphérie extérieure de la couronne de fixation 20 qui est mécaniquement solidaire de la chemise cylindrique creuse 30, dans la mesure bien entendu où ladite périphérie extérieure est accessible depuis l'extérieur de la chemise cylindrique creuse. Il est aussi possible de prévoir, à la périphérie extérieure de la chemise cylindrique creuse 30 servant de châssis, des anneaux de fixation spécialement destinés à l'accrochage des membranes annulaires souples de la suspension.

Ce genre de suspension élastique antivibratoire à deux membranes souples annulaires, placées de part et d'autres de la chemise cylindrique creuse renfermant un bloc gyromètre laser à activation mécanique, et centrées sur l'axe d'activation du bloc gyromètre laser respecte la symétrie de révolution présentée par le bloc gyromètre laser par rapport à son axe d'activation d'une manière beaucoup plus accomplie que la suspension élastique antivibratoire à plots élastiques de la technique antérieure en raison de la grande homogénéité des propriétés d'élasticité d'une membrane dans toutes les directions de son plan. Ce meilleur respect de la symétrie par rapport à l'axe d'activation entraîne des couplages mécaniques beaucoup plus faibles entre les axes sensibles du bloc gyromètre laser conduisant pratiquement à une suppression des mouvements coniques à la fréquence des oscillations d'activation et donc à une diminution des bruits résiduels et des dérives affectant les signaux du gyromètre.

## Revendications

1. Suspension élastique antivibratoire pour attacher le châssis (30) d'une unité de mesure Inertielle à l'intérieur d'un boîtier (24), un bloc gyromètre (10) à mouvement mécanique d'activation étant fixé dans ledit châssis (30) par l'intermédiaire de deux couronnes support (20, 21), flexibles en torsion de rotation, étagées le long du châssis (30) et centrées sur l'axe d'activation (Z) du bloc gyromètre (10), **caractérisée en ce qu'**elle comporte au moins une membrane annulaire souple (34, 35) disposée coaxialement à l'axe d'activation (Z) du bloc gyromètre (10) et fixée par son pourtour intérieur à la périphérie extérieure du châssis (30) et par son pourtour extérieur à la paroi interne du boîtier (24).

2. Suspension selon la revendication 1, **caractérisée en ce que** ladite membrane annulaire souple (34, 35) est une membrane plane.

3. Suspension selon la revendication 1, **caractérisée en ce que** ladite membrane annulaire souple (34, 35) est fixée à la périphérie extérieure du châssis (30) de l'unité de mesure inertielle par pincement de son bord intérieur entre un anneau de fixation solidaire de la périphérie extérieure du châssis cylindrique (30) et une rondelle de serrage attachée au dit anneau de fixation.

4. Suspension selon la revendication 1, **caractérisée en ce que** ladite membrane annulaire souple (34, 35) est fixée à l'intérieur d'un cadre rigide solidaire du boîtier par pincement de son bord extérieur entre ledit cadre et une rondelle de serrage attachée audit cadre rigide.

5. Suspension selon la revendication 1, **caractérisée en ce que** ladite membrane annulaire souple (34, 35) est réalisée en une matière souple moulée, et renforcée au niveau de ses bords intérieur et extérieur par deux cerclages rigides pris dans la masse de la matière moulée et percés d'orifices de vissage.

6. Suspension selon la revendication 1, **caractérisée en ce que** ladite membrane annulaire souple (34, 35) est en une matière plastique souple.

7. Suspension selon la revendication 1, **caractérisée en ce que** ladite membrane annulaire souple (34, 35) est en une matière en caoutchouc.

8. Suspension selon la revendication 1, **caractérisée en ce qu'**elle comporte deux membranes annulaires souples (34, 35) centrées sur l'axe d'activation (Z) du bloc gyromètre (10), disposées de manière étagée sur la hauteur de la paroi extérieur du châssis (30), chacune de ces deux membranes annulaires souples (34, 35) étant fixée par son bord intérieur à la paroi extérieure du châssis (30) et par son bord extérieur à la paroi intérieure du boîtier(24).

9. Suspension selon la revendication 1, **caractérisée en ce que** le boîtier (14) de l'unité de mesure inertielle est cylindrique et comporte intérieurement, au niveau de ses deux extrémités, des cadres (32, 33) centrés sur l'axe d'activation (Z) du bloc gyromètre (10) auxquels sont fixés les bords du pourtour extérieur des membranes annulaires souples (34, 35).

10. Suspension selon la revendication 1, **caractérisé en ce que** le pourtour extérieur d'au moins une des couronnes support (20, 21) est accessible de l'extérieur du châssis (30) et équipé de moyens d'accrochage permettant la fixation du bord intérieur d'une des membranes annulaires souples (34, 35).

## Patentansprüche

1. Schwingungsdämpfende elastische Aufhängung für die Befestigung des Rahmens (30) einer Trägheitsmesseinheit im Inneren eines Gehäuses (24), wobei ein Gyrometerblock (10) mit mechanischer Betätigungsbewegung in dem Rahmen (30) mit Hilfe von zwei Stützkränzen (20, 21), die drehtorsionsbeweglich und entlang des Rahmens (30) gestuft und auf der Betätigungsachse (Z) des Gyrometerblocks (10) zentriert sind, befestigt ist, **dadurch gekennzeichnet, dass** sie mindestens eine flexible Ringmembran (34, 35) umfasst, die koaxial zur Betätigungsachse (Z) des Gyrometerblocks (10) angeordnet und mit ihrem Innenumfang an der äußeren Peripherie des Rahmens (30) und mit ihrem Außenumfang an der Innenwand des Gehäuses (24) befestigt ist.

2. Aufhängung nach Anspruch 1, **dadurch gekennzeichnet, dass** die flexible Ringmembran (34, 35) eine flache Membran ist.

3. Aufhängung nach Anspruch 1, **dadurch gekennzeichnet, dass** die flexible Ringmembran (34, 35) an der äußeren Peripherie des Rahmens (30) der Trägheitsmesseinheit durch Festklemmen ihres inneren Randes zwischen einem Befestigungsring, der mit der äußeren Peripherie des zylindrischen Rahmens (30) verbunden ist, und einer Klemmscheibe, die an dem Befestigungsring montiert ist, befestigt ist.

4. Aufhängung nach Anspruch 1, **dadurch gekennzeichnet, dass** die flexible Ringmembran (34, 35) im Inneren eines starren Rahmens, der mit dem Gehäuse verbunden ist, durch Festklemmen ihres äußeren Randes zwischen diesem Rahmen und einer Klemmscheibe, die mit dem starren Rahmen verbunden ist, befestigt ist.

5. Aufhängung nach Anspruch 1, **dadurch gekennzeichnet, dass** die flexible Ringmembran (34, 35) aus einem weichen Gussmaterial hergestellt und im Bereich ihrer inneren und äußeren Ränder durch zwei starre Umreifungen verstärkt ist, die der Masse des Gussmaterials entnommen und mit Schrauböffnungen durchbohrt sind.

6. Aufhängung nach Anspruch 1, **dadurch gekennzeichnet, dass** die flexible Ringmembran (34, 35) aus einem weichen Kunststoff besteht.

7. Aufhängung nach Anspruch 1, **dadurch gekennzeichnet, dass** die flexible Ringmembran (34, 35) aus einem Kautschukmaterial ist.

8. Aufhängung nach Anspruch 1, **dadurch gekennzeichnet, dass** sie zwei flexible Ringmembranen (34, 35) umfasst, die auf der Betätigungsachse (Z) des Gyrometerblocks (10) zentriert und auf der Höhe der Außenwand des Rahmens (30) gestuft angeordnet sind, wobei jede dieser beiden flexiblen Ringmembranen (34, 35) mit ihrem inneren Rand an der Außenwand des Rahmens (30) und mit ihrem äußeren Rand an der Innenwand des Gehäuses (24) befestigt ist.

9. Aufhängung nach Anspruch 1, **dadurch gekennzeichnet, dass** das Gehäuse (14) der Trägheitsmesseinheit zylindrisch ist und innen im Bereich seiner beiden Enden Rahmen (32, 33) umfasst, die auf der Betätigungsachse (Z) des Gyrometerblocks (10) zentriert und an denen die Ränder des äußeren Umfangs der flexiblen Ringmembranen (34, 35) befestigt sind.

10. Aufhängung nach Anspruch 1, **dadurch gekennzeichnet, dass** der äußere Umfang von mindestens einem der Stützkränze (20, 21) von außerhalb des Rahmens (30) zugänglich und mit Befestigungsmitteln versehen ist, die die Befestigung des Innenrandes einer der flexiblen Ringmembranen (34, 35) ermöglichen.

## Claims

1. Antivibration elastic suspension for attaching the chassis (30) of an inertial measurement unit to the inside of a casing (24), a gyro assembly (10) with a mechanical activating movement being fixed into the said chassis (30) via two support rings (20, 21) which are flexible in terms of torsion and in terms of rotation, spaced along the chassis (30) and centred along the axis of activation (Z) of the gyro assembly (10), **characterized in that** the suspension comprises at least one flexible annular diaphragm (34, 35) arranged so that it is coaxial with the axis of activation (Z) of the gyro assembly (10) and fixed by its interior periphery to the exterior periphery of the chassis (30) and by its exterior periphery to the interior wall of the casing (24).

2. Suspension according to Claim 1, **characterized in that** the said flexible annular diaphragm (34, 35) is a flat diaphragm.

3. Suspension according to Claim 1, **characterized in that** the said flexible annular diaphragm (34, 35) is fixed to the exterior periphery of the chassis (30) of the inertial measurement unit by trapping its interior edge between a fixing ring secured to the exterior periphery of the cylindrical chassis (30) and a clamping washer attached to the said fixing ring.

4. Suspension according to Claim 1, **characterized in that** the said flexible annular diaphragm (34, 35) is fixed inside a rigid frame secured to the casing by trapping its exterior edge between the said frame and a clamping washer attached to the said rigid frame.

5. Suspension according to Claim 1, **characterized in that** the said flexible annular diaphragm (34, 35) is made of a moulded flexible material, reinforced at its interior and exterior edges by two rigid hoops incorporated into the mass of the moulded material and pierced with screw-fastening orifices.

6. Suspension according to Claim 1, **characterized in that** the said flexible annular diaphragm (34, 35) is made of a flexible plastic.

7. Suspension according to Claim 1, **characterized in that** the said flexible annular diaphragm (34, 35) is made of a rubber material.

8. Suspension according to Claim 1, **characterized in that** it comprises two flexible annular diaphragms (34, 35) centred on the axis of activation (Z) of the gyro assembly (10) and arranged so that they are spaced out along the height of the exterior wall of the chassis (30), each of these two flexible annular diaphragms (34, 35) being fixed by its interior edge to the exterior wall of the chassis (30) and by its exterior edge to the interior wall of the casing (24).

9. Suspension according to Claim 1, **characterized in that** the casing (14) of the inertial measurement unit is cylindrical and comprises, on the inside, near its two ends, frames (32, 33) which are centred on the axis of activation (Z) of the gyro assembly (10) and to which the edges of the exterior periphery of the flexible annular diaphragms (34, 35) are fixed.

10. Suspension according to Claim 1, **characterized in that** the exterior periphery of at least one of the support rings (20, 21) is accessible from outside the chassis (30) and is equipped with attachment means allowing the interior edge of one of the flexible annular diaphragms (34, 35) to be fixed.
